(19) **Europäisches Patentamt / European Patent Office / Office européen des brevets**

(11) **EP 4 412 334 A1**

(12) # EUROPEAN PATENT APPLICATION
published in accordance with Art. 153(4) EPC

(43) Date of publication:
**07.08.2024  Bulletin 2024/32**

(21) Application number: **22874839.8**

(22) Date of filing: **26.09.2022**

(51) International Patent Classification (IPC):
**H04W 68/02** (2009.01)    **H04W 76/28** (2018.01)

(52) Cooperative Patent Classification (CPC):
**H04W 52/02; H04W 68/00; H04W 68/02;
H04W 76/28;** Y02D 30/70

(86) International application number:
**PCT/CN2022/121292**

(87) International publication number:
**WO 2023/051453 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.09.2021  CN 202111145429**

(71) Applicant: **Sharp Kabushiki Kaisha
Sakai-shi
Osaka 590-8522 (JP)**

(72) Inventors:
- **LUO, Chao
  Shanghai 201206 (CN)**
- **LIU, Renmao
  Shanghai 201206 (CN)**
- **MA, Xiaojun
  Shanghai 201206 (CN)**

(74) Representative: **Müller-Boré & Partner
Patentanwälte PartG mbB
Friedenheimer Brücke 21
80639 München (DE)**

(54) **PEI OCCASION DETERMINATION METHOD EXECUTED BY USER EQUIPMENT, AND USER EQUIPMENT**

(57)    The present invention provides a PEI occasion determination method performed by user equipment (UE), including: acquiring a capacity value of a paging early indication (PEI) occasion, the capacity value being the number of paging occasions corresponding to one PEI occasion; determining, according to the capacity value, a PEI frame number corresponding to a particular PEI occasion for the UE; and determining the particular PEI occasion from at least one PEI occasion associated with a PEI frame indicated by the PEI frame number, so as to detect PEI information on the particular PEI occasion.

S102
Acquire a capacity value of a PEI occasion

S104
Determine, according to the capacity value, a PEI frame number corresponding to a particular PEI occasion for UE

S106
Determine the particular PEI occasion from at least one PEI occasion associated with a PEI frame indicated by the PEI frame number, so as to detect PEI information on the particular PEI occasion

FIG. 2

EP 4 412 334 A1

## Description

### TECHNICAL FIELD

The present invention relates to the technical field of wireless communications, and relates specifically to a PEI occasion determination method performed by user equipment, and corresponding user equipment.

### BACKGROUND

User experience is one of the key factors of the success of 5G/NR, and is not merely a user-experienced data rate and delay, and reduction in terminal power consumption is also an important aspect. The enhanced technical solution of reduction in terminal power consumption is one of the elements of the success of 5G/NR. Although some existing techniques have been used for the reduction in terminal power consumption, an additional enhanced evolved technology is still one of key technologies in future development. For example, the power consumption reduction technology may be applied to a terminal in an idle state or an inactive state, thereby facilitating further reduction in power consumption of a terminal device in a corresponding state while ensuring a communication capability, or improving a signal receiving capability, and achieving some other benefits.

### SUMMARY

In order to solve at least some of the above problems, the present invention provides a PEI occasion determination method performed by user equipment and user equipment. Indication signal reception can enable a terminal to be capable of further acquiring an accurate measurement or parameter estimate, more sleep time, better signal receiving capability, or the like, so that the terminal achieves benefits such as reduction in power consumption and improvement in receiving capability, thereby improving the service capability of a network and expanding network compatibility, such that costs of communication network deployment are greatly reduced.

According to an embodiment of the present invention, provided is a PEI occasion determination method performed by user equipment (UE), comprising: acquiring a capacity value of a paging early indication (PEI) occasion, the capacity value being the number of paging occasions corresponding to one PEI occasion; determining, according to the capacity value, a PEI frame number corresponding to a particular PEI occasion for the UE; and determining the particular PEI occasion from at least one PEI occasion associated with a PEI frame indicated by the PEI frame number, so as to detect PEI information on the particular PEI occasion.

In addition, according to the present invention, provided is user equipment, comprising: a processor; and a memory, having instructions stored therein, wherein when run by the processor, the instructions perform the aforementioned method.

By means of the method of the present invention, UE can accurately determine a PEI occasion that needs to be monitored in a DRX cycle, thereby performing reception correctly while reducing power consumption.

### BRIEF DESCRIPTION OF THE DRAWINGS

The above and other features of the present invention will be more apparent from the following detailed description in combination with the accompanying drawings, in which:

FIG. 1 is a schematic diagram for illustrating a process in which a terminal determines a PF, a PO, and an MO in a paging cycle.
FIG. 2 is a flowchart of a PEI occasion determination method according to an embodiment of the present invention.
FIG. 3 is a schematic diagram for illustrating a PDCCH search resource set configuration process according to an embodiment of the present invention.
FIG. 4 is a block diagram schematically showing user equipment to which the present invention relates.

### DETAILED DESCRIPTION

The following describes the present invention in detail with reference to the accompanying drawings and specific embodiments. It should be noted that the present invention should not be limited to the specific embodiments described below. These embodiments are merely provided as examples to convey the scope of the subject matter to those skilled in the art. In addition, detailed descriptions of well-known technologies not directly related to the present invention are omitted for the sake of brevity, in order to avoid obscuring the understanding of the present invention.

Typically, all terms used herein will be interpreted according to the ordinary meaning thereof in the related technical field unless different meanings are clearly presented and/or implied in the context where the terms are used. Unless specified otherwise clearly, all references to a/one/the element, apparatus, assembly, component, step, etc., should be publicly interpreted as referring to at least one instance of the element, apparatus, assembly, component, step, etc. The steps of any method disclosed herein do not need to be performed in the exact order disclosed unless one step has to be explicitly described as being after or before another step and/or one step has to be after or before another step as implied. In appropriate cases, any feature of any embodiment disclosed herein is applicable to any other embodiment. Likewise, any advantage of any embodiment is applicable to any other embodiment, and vice versa.

In the following description, a SG/NR mobile communication system and later evolved versions thereof are used as exemplary application environments to describe a plurality of embodiments according to the present invention in detail. However, it is to be noted that the present invention is not limited to the following embodiments, but is applicable to many other wireless communication systems, such as a communication system after 5G, a 4G mobile communication system before 5G, and a 802.11 wireless network.

Some terms involved in the present invention are described below. Unless otherwise specified, the terms used in the present invention use the definitions herein. The terms given in the present invention may vary in LTE, LTE-Advanced, LTE-Advanced Pro, NR, and subsequent or other communication systems, but unified terms are used in the present invention. When applied to a specific system, the terms may be replaced with terms used in the corresponding system.

  3GPP: 3rd Generation Partnership Project
  LTE: Long Term Evolution
  NR: New Radio
  UE: User Equipment
  gNB: NR base station
  RedCap Device: Reduced Capability Device
  FR1: Frequency range 1 as defined in TS 38.104
  FR2: Frequency range 2 as defined in TS 38.104
  BWP: Bandwidth Part
  SFN: System Frame Number
  OFDM: Orthogonal Frequency Division Multiplexing
  CP: Cyclic Prefix
  TA: Timing Advance
  SCS: Sub-Carrier Spacing
  RB: Resource Block
  RE: Resource Element
  CRB: Common Resource Block
  PRB: Physical Resource Block
  VRB: Virtual Resource Block
  REG: Resource Element Group
  EPRE: Energy Per Resource Element
  TDD: Time Division Duplexing
  FDD: Frequency Division Duplexing
  CSI: Channel State Information
  DCI: Downlink Control Information
  MCS: Modulation and Coding Scheme
  SRS: Sounding Reference Signal
  DMRS: Demodulation Reference Signal
  CSI-RS: Channel State Information Reference signal
  TRS: Tracking Reference Signal
  CRC: Cyclic Redundancy Check
  SFI: Slot Format Indication
  QCL: Quasi Co-Location
  HARQ: Hybrid Automatic Repeat Request
  SIB: System Information Block
  SIB1: System Information Block Type 1
  PSS: Primary Synchronization Signal
  SSS: Secondary Synchronization Signal
  MIB: Master Information Block
  SSB: Synchronization Signal Block

CORESET: Control Resource Set
RACH: random-access channel
PBCH: Physical Broadcast Channel
PUCCH: Physical Uplink Control Channel
PUSCH: Physical Uplink Shared Channel
PRACH: Physical random-access channel
PDSCH: Physical downlink shared channel
PDCCH: Physical downlink control channel
UL-SCH: Uplink Shared Channel
DL-SCH: Downlink Shared Channel
NZP-CSI-RS: Non-Zero-Power CSI-RS
C-RNTI: Cell Radio Network Temporary Identifier
P-RNTI: Paging RNTI
RA-RNTI: Random Access RNTI
CS-RNTI: Configured Scheduling RNTI
SI-RNTI: System Information RNTI
TC-RNTI: Temporary C-RNTI
TMSI: Temporary Mobile Subscriber Identity

The following is a description of technologies associated with the solution of the present invention. Unless otherwise specified, the same terms in the specific embodiments have the same meanings as in the associated technologies.

It is worth pointing out that the user, the user equipment, and the terminal device in the specification of the present invention have the same meaning, and UE herein may also represent user equipment, which will not be specifically differentiated or defined hereinafter. Similarly, network devices are devices that communicate with a terminal, and include, but are not limited to, a base station device, a gNB, an eNB, a wireless AP, a wireless relay, a terminal having a relaying capability, etc., and will not be specifically differentiated or defined hereinafter. Herein, descriptions may be provided by using a base station as a form of a network device that is implemented, and in a specific implementation, other network device forms may be easily used for replacement.

In NR, a slot is used as a unit for identifying a corresponding resource. According to different network settings, one slot may include 14 (in a normal CP scenario) or 12 (in an extended CP scenario) OFDM symbols. A plurality of slots may form a subframe and a radio frame. One radio frame has a length of 10 milliseconds. Depending on different subcarrier spacing parameters, one radio frame may consist of several slots. For example, when the subcarrier spacing is 15 kHz, one radio frame consists of 10 slots, and when the subcarrier spacing is 30 kHz, one radio frame consists of 20 slots, and so on. The terminal may determine the slot location according to parameters such as a frame number SFN of the radio frame and the sequence number of the slot in the radio frame. The terminal may also determine a symbol location of signal transmission in the time domain according to the sequence number of a symbol in the slot.

Resources in NR may also be defined by means of resource blocks (RBs) and resource elements (REs). The resource block (RB) may be defined as $N_{sc}^{RB} = 12$ consecutive subcarriers in the frequency domain. For example, for the subcarrier spacing parameter of 15 kHz, one RB is 180 kHz in the frequency domain. A resource element (RE) is a resource determined by one OFDM symbol and one subcarrier. That is, one RE is one subcarrier in the frequency domain, and is one OFDM symbol in the time domain.

The terminal performs PDCCH signal reception on related resources according to parameters such as a PDCCH channel configured by a network. A resource of a PDCCH may be determined by means of a CORESET and search space set parameters. The terminal may determine, according to the CORESET and search space set parameters, a time-frequency resource parameter used by a PDCCH. For example, the period of a resource used by a PDCCH channel is determined according to the search space set parameters, such as a slot number, the position of a starting symbol in a slot, etc., and the number of symbols used by each CORESET and a frequency domain resource parameter, etc., are determined according to a CORESET parameter. By means of these configuration parameters, the terminal can determine several resources or resource sets for transmitting PDCCH signals, and the several resources or resource sets may be referred to as several PDCCH monitoring occasions. The terminal performs PDCCH signal detection on these PDCCH monitoring occasions. A PDCCH bears DCI signaling for controlling the terminal, and the DCI signaling is used to indicate information such as resource configurations, an action or behavior that the terminal needs to perform, or the like. The terminal monitors a PDCCH on a PDCCH monitoring occasion, and performs descrambling and CRC checking according to different RNTI configurations, etc., so as to determine whether there is DCI transmitted to the terminal. If DCI can be correctly demodulated, the terminal may perform a further action according to indication of the DCI.

According to different cases such as whether a connection to a wireless network is established and whether a wireless connection is suspended, terminals in the network may be divided into different states, such as a connected state, an idle state, an inactive state, and the like. A wireless connection is established between a user in the connected state and the network, and is used to perform data transmission or relevant service processing. A terminal in the idle state or the inactive state also maintains a certain connection to the network. For example, the terminal needs to monitor, according to a relevant configuration or parameter, a broadcast message and a paging message transmitted by the network, or perform relevant measurement, or the like. The processing of the user in the idle state is similar to the processing of the user in the inactive state in many aspects of the present invention. In order to avoid redundancy, if not indicated otherwise, in the present invention, the relevant actions related to the terminal in the idle state or the network may also be applied to the terminal in the inactive state. Other user states similar to the idle state may also be processed by analogy, and details will not be described herein.

If the terminal in the idle or inactive state does need to receive, transmit, or measure any signal, or the like, the terminal may be in a sleep state to reduce power consumption. According to different requirements, the terminal may be in different sleep modes. For example, the terminal enters a light sleep mode for transient dormancy when new signals need to be processed within a short period of time. As another example, the terminal enters a deep sleep mode used when the terminal does not need to process a new signal within a long period of time, and the deep sleep mode may reduce the power consumption of the terminal more than the light sleep mode. Generally, in the case that no service function is affected, causing the terminal to be in the dormant mode can effectively reduce power consumption of the terminal, thereby improving the user experience.

The terminal in the idle state or the inactive state needs to periodically receive information of the network, such as paging information, a SIB updating message, etc. The terminal in the idle state or the inactive state may use a discontinuous reception (DRX) mode to receive a paging message of the network so as to reduce power consumption. That is, in one DRX cycle, the terminal is woken up and performs reception only part of the time. For example, the terminal determines the position of a paging occasion in each paging cycle period according to a parameter configured by the network, monitors a paging PDCCH on a paging PDCCH monitoring occasion related to the paging occasion, and performs a further action according to content indicated in the paging PDCCH. For example, the terminal can determine, according to network configurations, a paging cycle period parameter T and a paging frame (PF) parameter N for receiving a paging message. One paging frame is one radio frame, and may include one or more paging occasions (POs) or a start of one PO. That is, one PF corresponds to or is associated with one or more POs, or one PF includes one or more POs. Similarly, a PF may also be referred to as a PF of one PO. One paging occasion consists of several paging PDCCH monitoring occasions (MOs). When using multi-beam transmission in the network, different MOs may correspond to different beams, so that terminals in different positions can all perform downlink reception well. For example, N paging frames are present in T radio frames of one paging cycle, and the terminal determines, according to a rule and a parameter, that one of the N paging frames is the paging frame in which the terminal needs to detect paging information. When one paging frame corresponds to a plurality of POs, the terminal determines, according to a rule and a parameter, that one of the plurality of POs is a PO of the terminal. The terminal may then select, according to the circumstance of the terminal, an MO in the PO to receive a PDCCH. For example, one or more certain MOs are selected according to beam information to detect a paging PDCCH. If the terminal detects a valid paging PDCCH, the terminal performs paging PDSCH reception or another related action according to detected DCI.

In a specific example, the terminal may acquire, according to a TMSI or an IMSI of a user, a parameter UE_ID for determining a paging occasion. A TMSI of a terminal typically has a relatively large number of bits. For example, a 5G-S-TMSI has 48 bits. A certain operation may cause terminals of different TMSIs to correspond to the same UE_ID, thereby simplifying design of paging. For example, by means of the 5G-S-TMSI of the terminal, it is determined that UE_ID = 5G-S-TMSI mod 1024, where mod is the modulo operation.

Furthermore, the terminal acquires, according to a parameter configured by the network, a frame number SFN of a PF corresponding to a PO that the user needs to monitor, and the frame number SFN satisfies the following condition:

$$(SFN + PF\_offset) \bmod T = (T/N)*(UE\_ID \bmod N)$$

where PF_offset is a paging frame offset value configured by the network, and T is a paging cycle period determined by the terminal; N is the number of paging frames in one paging cycle period; and mod is the modulo operation.

The terminal determines the frame number of the paging frame (PF), and then determines the PO that needs to be monitored. Depending on different network configurations, one PF may be associated with a plurality of POs. The UE needs to determine one specific PO among the plurality of POs that is monitored to monitor a related PDCCH to determine whether a corresponding paging message and the like is present. For example, the terminal may determine, according to a sequence number i_s of the PO related to the PF, the PO that the terminal needs to monitor.

$$i\_s = floor\ (UE\_ID/N)\ mod\ Ns$$

where Ns is configured by the network, and is the number of POs corresponding to one PF; and floor is a floor operation.

After the terminal determines the sequence number of the PO, the terminal may determine information about each monitoring occasion (MO) according to a paging search space set parameter configured by the network. For example, the terminal may determine, starting from a PF radio frame and according to a search space set configuration and a CORESET configuration of a paging PDCCH, the sequence number of the PO associated with the PF and S*X consecutive MOs of the PO, where S is the number of SSBs actually transmitted in one SSB cycle in the network, and may be determined, for example, by means of parameter *ssb-PositionsInBurst* in SIB1. The value of X is 1 by default, or may be configured by a higher layer. Every S MOs of the PO are respectively associated with S different SSB sequence numbers, that is, respectively satisfying a QCL relationship according to the order of the SSB sequence numbers.

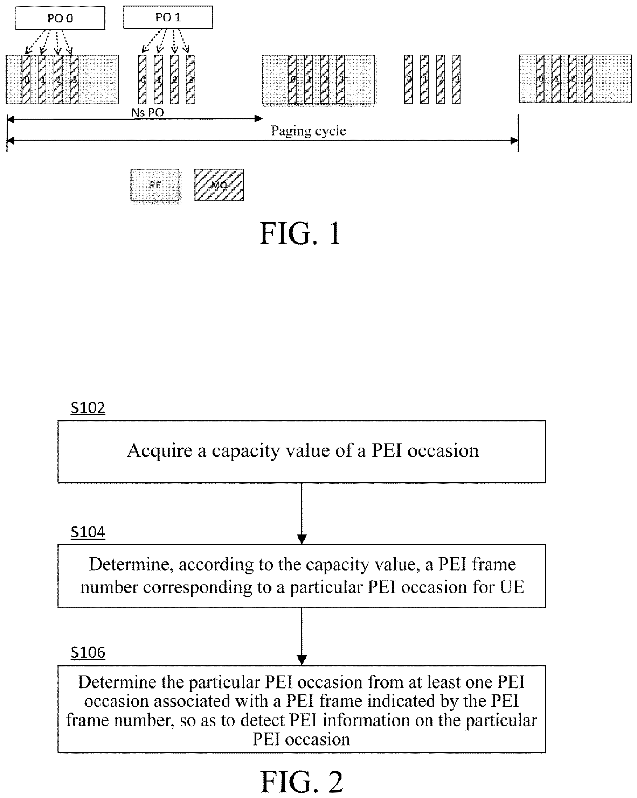

For example, as shown in FIG. 1, the terminal may determine two PFs in one paging cycle according to configurations. The terminal determines, according to the TMSI etc. of the UE, that the UE uses the first PF as the PF monitored by the terminal (i.e., the PF for the terminal). Similarly, the terminal may determine, according to a relevant parameter, that the sequence number of the monitored PO is PO1, and that four MOs corresponding to PO1 respectively correspond to SSB0, SSB1, SSB2, and SSB3. The terminal monitors the paging PDCCH on the related MO.

According to the above method, the terminal may monitor the paging PDCCH on the determined MO, and acquire relevant DCI. The DCI in the paging PDCCH includes some information, for example, for indicating whether there is a corresponding paging message that a user needs to receive. If a paging message needs to be received, the DCI further indicates PDSCH resource parameters for transmitting the paging message, including parameters such as a time domain resource, a frequency domain resource, a modulation means, etc. The terminal may receive a paging PDSCH according to the indication.

To reduce power consumption, a terminal in the idle state typically operates in a DRX state. When the terminal does not receive data, the terminal enters a dormant state. When the terminal receives data, the terminal needs to be in a state of being synchronized with a base station in time and frequency, so as to ensure correct transmission of the data. When the terminal operates, there may be a time-frequency difference between the terminal and the base station. Particularly in the dormant state, continuous accumulation of small differences may result in a large difference, resulting in the terminal no longer being synchronized with the base station. The terminal may perform time-frequency tracking by receiving an SSB, so as to be accurately synchronized with the base station. Therefore, when performing PO monitoring, the terminal needs to be woken up in advance, and receive a plurality of SSBs, so that the terminal is synchronized with the network in time and frequency. If DCI detected by the terminal in a PO indicates that there is no paging data to be received, the terminal may re-enter the dormant mode to reduce power consumption.

The network may transmit indication information before the terminal monitors a PO, to indicate whether the terminal needs to monitor a PO in a paging cycle. The indication information may be referred to as a paging early indication (PEI), or may have another name. Hereinafter, the PEI may be used to refer to all relevant information. For example, when paging information in the network needs to be received by the terminal, the network transmits PEI indication information to indicate that the terminal needs to monitor a corresponding PO. The terminal is woken up before the PO, performs time-frequency synchronization, and monitors a paging PDCCH and receives a possible PDSCH on the determined PO. If the PEI indication information received by the terminal indicates that the terminal does not need to monitor a PO, then the terminal does not need to perform monitoring on the corresponding PO, and does not need to be woken up and receive an SSB before the PO to perform time-frequency synchronization to prepare for possible PDSCH reception. In this way, the terminal can avoid, by means of the indication of the network, unnecessary actions such as waking up, synchronization, etc., thereby reducing power consumption of the terminal.

The PEI indication information may be transmitted by using a PDCCH. The network configures a search space set and a CORESET parameter used by a PEI-PDCCH. The terminal determines resources related to the PEI-PDCCH according to the configuration. The terminal may determine, according to configurations of the PEI-PDCCH, several PEI occasions and several PEI-PDCCH monitoring occasions related to the PEI occasions. In the network, several PEI occasions may be present in one DRX cycle, and the network transmits indication information to different terminals in the PEI-PDCCH on these PEI occasions. To reduce power consumption, one terminal does not monitor all PEI occasions. Therefore, the terminal needs to determine which PEI occasions to monitor in a DRX cycle, that is, to determine the correspondence between PEI occasions and a PO monitored by the terminal, so that the terminal can correctly receive a PEI-PDCCH and acquire, from demodulated PEI-DCI, PEI indication information indicating whether the UE monitors the PO.

Embodiments of the present invention are described below.

FIG. 2 is a flowchart of a PEI occasion determination method according to an embodiment of the present invention.

As shown in FIG. 2, in S102, a capacity value of a paging early indication (PEI) occasion is acquired, and the capacity value is the number of paging occasions corresponding to one PEI occasion.

The capacity value may be acquired by any one of the following means: acquiring the capacity value from a network by means of RRC signaling; determining the capacity value on the basis of cycle information of the PEI occasion, a paging cycle of the UE, the total number of paging frames in the paging cycle, and the number of paging occasions corresponding to one paging frame; determining the capacity value on the basis of the total number of paging occasions and the total number of PEI occasions in one discontinuous reception (DRX) cycle; and determining the capacity value on the basis of the total number of PEI frames and the total number of paging frames in the one DRX cycle. Details are described in Embodiment 1.

In S104, a PEI frame number corresponding to a particular PEI occasion for the UE is determined according to the capacity value.

The PEI frame number corresponding to the particular PEI occasion may be determined according to a first rule generated on the basis of a paging cycle of the UE, the total number of paging frames in one paging cycle, a preconfigured PEI frame offset value, and a first reference value. The first reference value is determined according to a second rule determined on the basis of the value relationship between the capacity value and the number of paging occasions associated with one paging frame. As an example, if the capacity value is not greater than the number of paging occasions associated with one paging frame, the second rule is generated on the basis of a UE identifier of the UE in a corresponding cell, the paging cycle of the UE, and a preconfigured minimum offset between the PEI frame and a PF frame corresponding to a paging occasion for the UE. If the capacity value is greater than the number of paging occasions associated with one paging frame, the second rule is generated on the basis of a UE identifier of the UE in a corresponding cell, the paging cycle of the UE, a preconfigured minimum offset between the PEI frame and a PF frame corresponding to a paging occasion for the UE, the capacity value, and the number of paging occasions in the one paging frame. An example of the described method is described in Embodiment 1 below.

In addition, a minimum offset between the PEI frame and a reference radio frame may be preconfigured. In this case, the operation in S 104 may be performed by using the following means. A frame number of the reference radio frame is determined according to a third rule generated on the basis of a paging cycle of the UE, the total number of paging frames in one paging cycle, a preconfigured PF frame offset value in a network in which the UE is located, and a second reference value. Then, the PEI frame number is determined according to a rule generated on the basis of the frame number of the reference radio frame and the minimum offset. The second reference value is determined according to a fourth rule determined on the basis of the value relationship between the capacity value and the number of paging occasions associated with one paging frame. As an example, if the capacity value is not greater than the number of paging occasions associated with one paging frame, the fourth rule is generated on the basis of a UE identifier of the UE in a corresponding cell and the paging cycle of the UE. If the capacity value is greater than the number of paging occasions associated with one paging frame, the fourth rule is generated on the basis of a UE identifier of the UE in a corresponding cell, the paging cycle of the UE, a paging frame offset value of the cell in which the UE is located, the capacity value, and the number of paging occasions in one paging frame. An example of said means is described in detail in Embodiment 2 below.

Then, in S 106, the particular PEI occasion is determined from at least one PEI occasion associated with a PEI frame indicated by the PEI frame number, so as to detect PEI information on the particular PEI occasion.

One PEI frame may be associated with one PEI occasion. In this case, after a PEI frame is determined, a PEI occasion is also uniquely determined. In addition, one PEI frame may also be associated with a plurality of PEI occasions. In this case, a corresponding rule may be determined according to the value relationship between the capacity value and paging occasions associated with one paging frame, and then a particular PEI occasion is determined from the plurality of PEI occasions according to the corresponding rule. The corresponding rule is generated on the basis of the capacity value, the number of paging occasions associated with one paging frame, and a sequence number of each paging occasion in a corresponding paging frame. Embodiment 3 below describes a specific example of this case.

After the PEI occasion is determined, a particular PEI-PDCCH monitoring occasion for detecting PEI information for the UE may be further determined from the particular PEI occasion. For example, a PEI-PDCCH monitoring occasion corresponding to an SSB of the UE may be determined according to a sequence number of the particular PEI occasion in the PEI frame indicated by the PEI frame number and a sequence number of the SSB for the UE in all SSBs actually transmitted by the network and from at least one PEI-PDCCH monitoring occasion included by the particular PEI occasion, and the PEI-PDCCH monitoring occasion is used to detect the PEI information for the UE.

In another example, starting position information regarding at least one PEI-PDCCH monitoring occasion included by the particular PEI occasion may also be preconfigured. At which time, a PEI-PDCCH monitoring occasion for the UE may be determined according to a sequence number of the particular PEI occasion in the PEI frame indicated by the PEI frame number and the starting position information. Embodiment 3 below describes in detail the procedure for determining a PEI-PDCCH monitoring occasion.

Specific embodiments are provided below to describe embodiments of the present invention.

[Embodiment 1]

A terminal may determine, according to configurations of a network, on which PEI occasions to detect PEI information. Optionally, a PEI occasion may be determined by means of a PEI occasion radio frame. The terminal determines a frame number of a PEI occasion radio frame to determine a corresponding PEI occasion and a PEI-PDCCH monitoring occasion. A PEI occasion radio frame is one radio frame, and may include one or more PEI occasions or the start of a PEI occasion. A PEI occasion radio frame may be simply referred to as a PEI frame, a PEI radio frame, or another name, and may be represented by a relevant abbreviation hereinafter. To simplify the description of the relationship between a PEI frame and a PEI occasion, it may be expressed herein that a PEI occasion radio frame is associated with one or more PEI occasions or includes one or more PEI occasions. Similarly, a PEI occasion radio frame may also be referred to as a PEI occasion PF frame.

To reduce resource overhead in the network or avoid collisions in PDCCH monitoring or the like, the network may configure one PEI occasion to correspond to one or more POs. That is, the terminal that monitors these POs may detect corresponding PEI-DCI on a related resource of one PEI occasion. This PEI-DCI may use one field to indicate PEI indication information of all the POs, or use a plurality of different fields to separately indicate PEI indication information of the POs. The terminal may be configured according to higher layer signaling to acquire the number of POs corresponding to one PEI occasion, which may be referred to as the capacity of the PEI occasion and is herein denoted as D.

In an optional embodiment, the terminal determines the PEI occasion radio frame according to the capacity of the PEI occasion and a minimum offset between the PEI occasion radio frame and an indicated PF frame.

To ensure that the terminal receiving the PEI information can achieve a good power saving effect, for example, to allow a sufficient number of synchronizing signals to be present between a PEI and an indicated PO, the network may configure an offset or a minimum offset between a PEI frame and a PF frame associated with a PO monitored by the terminal. The offset or minimum offset is denoted as K. For example, when the network uses one PEI occasion to correspond to one PO, the offset configured by the network is an offset between a PEI frame and a PF. When the network uses one PEI occasion to correspond to a plurality of POs, the offset configured by the network is a minimum offset between a PEI frame and a PF.

In a specific embodiment, the terminal acquires the capacity of the PEI occasion according to configurations, and acquires a PEI frame number according to the capacity, the minimum offset, and a relevant parameter. For clear description, a method of using steps to perform description is employed in related embodiments. An actual acquisition procedure may perform further combination, division, equivalent replacement or other methods on related operations, or may use other symbols to identify relevant parameters. These do not affect the spirit of the invention.

The terminal is configured by means of RRC signaling to acquire a capacity value of one PEI occasion. Optionally, the terminal acquires the capacity of one PEI occasion by means of cycle information of the PEI occasion. For example, the network configures the cycle of the PEI occasion to be R radio frames. The terminal may acquire a minimum spacing between two PFs according to a paging configuration parameter in the network, the minimum spacing being T/N radio frames, and so the terminal may determine that the capacity D of one PEI occasion = R/(T/N)*Ns.

Optionally, the terminal acquires the capacity of each PEI occasion according to the total capacity of PEI occasions in one DRX cycle. For example, the network configures K PEI occasions to be present in one DRX cycle. For example, K=T/8 or K=T/16 or the like, T being a paging DRX cycle period determined by the terminal. The terminal may determine that N*Ns POs are present in one DRX cycle, and thus the terminal may determine that the capacity of each PEI occasion is D = N*Ns/K.

Optionally, the terminal acquires the capacity of each PEI occasion according to the number of PEI frames in one DRX cycle. For example, the network configures L PEI frames to be in one DRX cycle, and each PEI frame is associated with M PEI occasions. For example, L=T/8 or L=T/16 or the like, T being a paging DRX cycle period determined by the terminal. The terminal may determine that N PFs are present in one DRX cycle, and thus the terminal may determine that the capacity of each PEI occasion is D = N*Ns/(L*M).

In an optional embodiment, the terminal acquires, according to the capacity of the PEI occasion, the minimum offset between the PEI frame and the PF, and a relevant paging parameter, the PEI frame number monitored by the terminal.

Optionally, when the capacity D of the PEI occasion is less than or equal to Ns, the terminal determines that the number of POs corresponding to one PEI occasion is less than or equal to the number of corresponding POs in one PF. The terminal may acquire, according to a user identifier and parameter UE_ID for determining a paging occasion, for example, UE_ID = 5G-S-TMSI mod 1024. Before the terminal acquires a relevant user identifier, UE_ID = 0 can be used. The terminal acquires the value of a reference ID according to UE_ID, ref_ID = (UE_ID mod N) - K, and the reference ID is used to determine the position of a PEI radio frame in a paging cycle. K is the minimum offset between the PEI frame and the PF, and the value of K is a positive integer between 1 and N-1.

The terminal may acquire the PEI frame number PEI_SFN according to ref_ID, and the PEI frame number PEI_SFN is an SFN satisfying the following condition:

$$(\text{SFN} + \text{PEI\_offset}) \bmod T = (T/N)*(\text{ref\_ID} \bmod N)$$

where T is the paging cycle period determined by the terminal; N is the number of paging frames in one paging cycle period; mod is the modulo operation; and PEI_offset is a frame offset value of the PEI occasion configured by the network. Optionally, the network does not configure the value of PEI_offset, and the terminal uses the same value for PEI_offset as that of PF_offset configured by the network.

Optionally, the terminal determines whether PEI information indicated in a PEI-PDCCH in a PEI frame instructs the terminal to monitor the first PO to be monitored after the PEI frame or instructs the terminal not to monitor the first PO to be monitored after the PEI frame.

Optionally, the PEI-PDCCH in the PEI frame includes a valid time length field L, and the terminal determines that the PEI information indicated in the PEI-PDCCH in the PEI frame indicates a PO to be monitored (i.e., a PO for the UE) in L cell default DRX cycles after the PEI frame.

Optionally, when the capacity D of the PEI is greater than Ns, the terminal determines that the number of POs corresponding to one PEI occasion is greater than the number of corresponding POs in one PF. The terminal may acquire, according to a TMSI of a user, a parameter UE_ID for determining a paging occasion, for example, UE_ID = 5G-S-TMSI mod 1024. Before the terminal acquires a relevant user identifier, UE_ID = 0 can be used. The terminal acquires the value of a reference ID according to UE_ID,

$$\text{ref\_ID} = \text{floor}((\text{UE\_ID} \bmod N)/F) - K,$$

or

$$\text{ref\_ID} = \text{floor}((\text{UE\_ID} \bmod N)*Ns/D) - K.$$

F = DINs, i.e., the number of PFs corresponding to one PEI occasion. The terminal may acquire the PEI frame number PEI_SFN according to ref_ID, and the PEI frame number PEI_SFN is an SFN satisfying the following condition:

$$(\text{SFN} + \text{PEI\_offset}) \bmod T = (T/N)*(\text{ref\_ID} \bmod N)$$

Optionally, the terminal determines whether PEI information indicated in a PEI-PDCCH in a PEI frame instructs the terminal to monitor the first PO to be monitored (i.e., a PO for the UE) after the PEI frame or instructs the terminal not to monitor the first PO to be monitored after the PEI frame.

Optionally, the PEI-PDCCH in the PEI frame includes a valid time length field L, and the terminal determines that the PEI information indicated in the PEI-PDCCH in the PEI frame indicates a PO to be monitored (i.e., a PO for the UE) in L cell default DRX cycles after the PEI frame.

T is the paging cycle period determined by the terminal. N is the number of paging frames in one paging cycle period. mod is the modulo operation. PEI_offset is a frame offset value of the PEI occasion configured by the network. Optionally, the network does not configure the value of PEI_offset, and the terminal uses the same value for PEI_offset as that of PF_offset configured by the network.

[Embodiment 2]

In an optional embodiment, a terminal acquires a reference radio frame number according to the capacity of a PEI occasion, and determines, according to the reference radio frame number and a minimum offset between a PEI occasion radio frame and a PF frame, a PEI occasion radio frame monitored by the terminal.

Optionally, when the capacity D of the PEI occasion is less than or equal to Ns, the terminal determines that the number of POs corresponding to one PEI occasion is less than or equal to the number of corresponding POs in one PF. The terminal may acquire, according to a TMSI of a user, parameter UE_ID for determining a paging occasion, for example, UE_ID = 5G-S-TMSI mod 1024. Before the terminal acquires a related identifier, UE_ID = 0 can be used. The terminal acquires the value of a reference ID according to UE_ID, ref_ID = (UE_ID mod N), and then the terminal acquires the reference radio frame number ref_SFN satisfying the following condition:

$$(\text{ref\_SFN} + \text{PF\_offset}) \bmod T = (T/N)*\text{ref\_ID}$$

Optionally, when the capacity D of the PEI is greater than Ns, the terminal determines that the number of POs corresponding to one PEI occasion is greater than the number of corresponding POs in one PF. The terminal may acquire, according to a TMSI of a user, the parameter UE_ID for determining a paging occasion, and acquires the value of the ID according to UE ID, ref_ID = floor((UE_ID mod N)/F),

or

$$\mathrm{ref\_ID} = \mathrm{floor}((\mathrm{UE\_ID\ mod\ N}) * \mathrm{Ns/D}).$$

F = DINs, i.e., the number of PFs corresponding to one PEI occasion. The terminal may acquire the reference radio frame number ref_SFN satisfying the following condition:

$$(\mathrm{ref\_SFN} + \mathrm{PF\_offset})\ \mathrm{mod\ T} = (\mathrm{T/N}) * \mathrm{ref\_ID}$$

The terminal determines, according to ref_SFN and the minimum offset K, a PEI occasion radio frame number PEI_SFN satisfying:

$$(\mathrm{PEI\_SFN} + \mathrm{K})\ \mathrm{mod\ F} = \mathrm{ref\_SFN}.$$

In addition, the PEI occasion radio frame is the first radio frame that satisfies requirements before the PF of the terminal, that is, a radio frame satisfying the above expression, located before the PF monitored by the terminal, and spaced apart from the PF by a minimum spacing.

K is the minimum offset from the PEI frame to the PF monitored by the terminal, and the value of K is a positive number of radio frames, the positive number being a certain positive integer between 1 and T-1. F is a number for identifying a range of radio frames in a system. For example, when a radio frame sequence number is represented by ten bits, the value of F is 1024. When the radio frame sequence number is represented by eleven bits, the value of F is 2048, and so on. T is a paging cycle period determined by the terminal. N is the number of paging frames in one paging cycle period. mod is the modulo operation.

[Embodiment 3]

According to a related method, a terminal can determine a radio frame of a monitored PEI occasion. Depending on different network configurations, the terminal may determine that one PEI occasion radio frame is associated with several PEI occasions, and the terminal determines that one among the several PEI occasions is a PEI occasion monitored by the terminal (i.e., a PEI occasion for the terminal) and determines a related PEI-PDCCH monitoring occasion.

Optionally, when the capacity D of the PEI occasion is less than or equal to Ns, the terminal determines that an index of the PEI occasion is i_s_pei = i_s/floor(Ns/D). Optionally, when D can divide Ns evenly, i_s_pei = i_s*D/Ns.

Optionally, when the capacity D of the PEI is greater than Ns, the terminal determines that the first PEI occasion associated with the PEI frame is the PEI occasion monitored by the terminal. That is, the terminal determines that the index of the monitored PEI occasion is i_s_pei = 0,

where i_s_pei is the index of the PEI occasion associated with a PEI frame, and i_s is the index of the PO monitored by the terminal in POs associated with the PF.

After the PEI occasion is determined, a related PEI-PDCCH monitoring occasion may be determined. A procedure for determining a PEI-PDCCH monitoring occasion is described below.

The network may indicate an SSB transmission parameter by means of an SIB or RRC message. For example, the network indicates, by means of an ssb-PositionsInBurst information element in SIB1, information such as the number and sequence numbers of actually-transmitted SSBs, etc. Different SSBs may correspond to different coverage directions, so that all terminals in an entire cell can perform downlink reception well. According to different configuration parameters of the SSB etc., in the network, one PEI occasion consists of several PEI-PDCCH monitoring occasions. The terminal determines several PEI occasions and several PEI-PDCCH monitoring occasions according to the PEI frame and the configuration parameters.

For example, the terminal determines M PEI occasions from slots starting from the PEI frame, and each PEI occasion includes X*S consecutive PEI-PDCCH monitoring occasions. Every S PEI-PDCCH monitoring occasions separately correspond to S different SSB sequence numbers. Therefore, the (x*S+s)-th PDCCH monitoring occasion in each PEI occasion corresponds to the s-th actually-transmitted SSB sequence number. The value of X is configured by a higher layer. x=0, 1, ..., X-1. s=1, 2, ..., S. Optionally, the higher layer does not configure the value of X, and the terminal uses X=1 to determine a corresponding PEI-PDCCH monitoring occasion sequence number. S is the number of actually-transmitted SSBs, and may be determined according to ssb-PositionsInBurst in SIB1.

Optionally, PEI-PDCCH monitoring occasions do not overlap with any uplink symbol, and the PEI-PDCCH monitoring occasions that do not overlap with any uplink symbol are sequentially numbered one-by-one starting from the first PEI-PDCCH monitoring occasion after the PEI frame. The terminal determines that the S*X PEI-PDCCH monitoring occasions starting from the sequence number of i_s_pei * S*X are the PEI-PDCCH monitoring occasions of the PEI occasion. The PEI-PDCCH monitoring occasion is determined according to a search space set and a CORESET parameter of the PDCCH. i_s_pei is the number of the PEI occasion associated with one PEI frame.

Optionally, the network configures a starting PEI-PDCCH monitoring occasion sequence number of one or more PEI occasions. The terminal determines that the (i_s_pei + 1)-th PEI occasion corresponding to a PEI frame uses the (i_s_pei+1)-th value therein as the sequence number of the starting PEI-PDCCH monitoring occasion of the PEI occasion. In a specific example, the terminal determines that one PEI frame corresponds to two PEI occasions. The network configures the starting PEI-PDCCH monitoring sequence numbers of the PEI occasion to respectively be [a, b]. The terminal determines that S*X PEI-PDCCH monitoring occasions starting from the (a+1)-th PEI-PDCCH in a PEI are PEI-PDCCH monitoring occasions of the first PEI occasion. The terminal determines that S*X PEI-PDCCH monitoring occasions starting from the (b+1)-th PEI-PDCCH in one PEI are PEI-PDCCH monitoring occasions of the second PEI occasion. When one PEI frame corresponds to more or fewer PEI occasions, PEI-PDCCH monitoring occasions of each PEI occasion can be determined by using a similar method.

Optionally, during multi-beam transmission, the UE assumes that the same PEI information can be received on all transmitted beams. Optionally, when DCI further includes TRS validity indication information, the terminal does not assume that TRS validity indication information is the same on different beams.

[Embodiment 4]

When a PEI search space does not use the same search space as a paging search space or search space 0, PEI information transmission on a plurality of beams can be implemented on resources of one PEI-PDCCH monitoring occasion, thereby reducing complexity of PEI occasion configuration, and simplifying system or terminal implementation.

According to a related configuration and method, a terminal can determine a PEI occasion that needs to be monitored. For example, the terminal may determine PEI-PDCCH monitoring occasions of several cycles in the time domain according to PEI-PDCCH configurations. The terminal may determine, according to a minimum offset value configured by the network from a PO or a PF monitored by the terminal to a PEI occasion, that the first PEI-PDCCH monitoring occasion located before the PO or the PF and spaced apart therefrom by a distance greater than or equal to the minimum offset value is a PEI occasion that needs to be monitored.

In an optional embodiment, the terminal determines a PDCCH monitoring resource of the PEI occasion, and determines the correspondence between the PDCCH monitoring resource in the PEI occasion and an SSB according to an SSB sequence number order.

The terminal determines the PDCCH monitoring resource of the PEI occasion. In a specific embodiment, the terminal can determine a cycle of a PEI-PDCCH occasion and a slot offset in the cycle according to search space set configurations of the PEI-PDCCH. For example, the terminal may determine, according to the search space set configurations, that a starting position of a PDCCH occasion is in a slot $n_{s,f}^{\mu}$ of a radio frame $n_f$ satisfying

$$(n_f \cdot N_{slot}^{frame,\mu} + n_{s,f}^{\mu} - o_s) \bmod k_s = 0$$

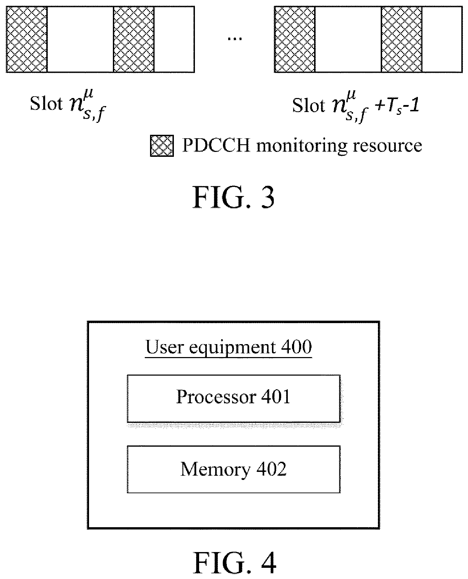

where $o_s$ is a cycle of the PEI-PDCCH on a BWP according to the search space set configurations, and $k_s$ is a slot offset of the PEI-PDCCH on the cycle according to the search space set configurations. $N_{slot}^{frame,\mu}$ is the number of slots in one radio frame, and is determined according to a subcarrier parameter $\mu$ of the BWP. The terminal may determine a starting symbol of a monitoring resource of a PEI-PDCCH monitoring occasion in a slot according to a search space set parameter monitoringSymbolsWithinSlot of the PEI-PDCCH, so that the terminal may determine one or more symbol locations of the PEI-PDCCH in the slot. The terminal may determine the number of symbols, bandwidth information, etc., of each PDCCH monitoring resource according to CORESET configurations of the PEI-PDCCH. In addition, the terminal may also determine, according to the search space set parameter of the PEI-PDCCH, that the number of slots of one PDCCH occasion is $T_s$. That is, the terminal may monitor the PDCCH on a PDCCH resource set of $T_s$ slots starting at $n_{s,f}^{\mu}$. An example of PDCCH monitoring resources of a PEI-PDCCH occasion is shown in FIG. 3.

As shown in FIG. 3, the terminal determines, according to a parameter, that a starting slot of the PEI-PDCCH occasion is $n_{s,f}^{\mu}$ and that k=2 starting symbol locations are present in each slot. Resource blocks formed by RBs located on n=2 symbols starting from each starting symbol in each slot and determined by a CORESET parameter are a PDCCH monitoring resource for monitoring a PDCCH candidate set. The number of slots of the PDCCH occasion of the search space set configurations of the PEI-PDCCH is $T_s$. The terminal can determine, from the slot $n_{s,f}^{\mu}$ and the following $T_s$-1 slots, k*Ts pieces of candidate PDCCH resource set information for monitoring the PDCCH candidate set. The terminal determines, according to resources in the PEI-PDCCH monitoring occasion, that the PEI-PDCCH monitoring occasion is used as the PDCCH monitoring resource corresponding to the PEI occasion.

The terminal determines the mapping relationship between the PDCCH monitoring resource in the PEI occasion and the SSB. The network may indicate an SSB transmission parameter by means of an SIB or RRC message. For example, the network indicates, by means of the ssb-PositionsInBurst information element in SIB1, information such as the number and sequence numbers of actually-transmitted SSBs, etc. Different SSBs may correspond to different coverage directions, so that all terminals in an entire cell can perform downlink reception well. According to different configuration parameters of the SSB etc., in the network, one PEI occasion consists of several PDCCH monitoring resources, and each resource may correspond to a different SSB sequence number, so that all terminals in a cell can receive good PDCCH signals.

In a specific embodiment, the terminal determines, starting from the first monitoring resource of the PEI occasion, X* S PDCCH monitoring resources on one PEI-PDCCH occasion. These monitoring resources start from the slot of the PEI occasion, are determined according to the search space set configurations of the PEI-PDCCH, and do not overlap with any uplink symbol. Every S monitoring resources separately correspond to S different SSB sequence numbers. Therefore, the (x*S+s)-th monitoring resource in each PEI occasion corresponds to the s-th actually-transmitted SSB sequence number, where x=0, 1, ..., X-1. s=1, 2, ..., S. The value of X is configured by a higher layer. Optionally, the higher layer does not configure the value of X, and the terminal uses X=1 as a default value to determine a valid monitoring resource in a corresponding PEI occasion. S is the number of actually-transmitted SSBs, and may be determined according to ssb-PositionsInBurst in SIB1.

Optionally, the terminal does not need to monitor PDCCH monitoring resources that are determined by the PEI occasion and that have a sequence number greater than X*S.

Hereinafter, FIG. 4 is used to illustrate user equipment that can perform the method performed by user equipment described in detail above in the present invention as a variant embodiment.

FIG. 4 shows a block diagram of user equipment (UE) to which the present invention relates.

As shown in FIG. 4, the user equipment (UE) 40 includes a processor 401 and a memory 402. The processor 401 may include, for example, a microprocessor, a microcontroller, an embedded processor, and the like. The memory 402 may include, for example, a volatile memory (such as a random access memory (RAM)), a hard disk drive (HDD), a non-volatile memory (such as a flash memory), or other memories, etc. The memory 402 stores program instructions. The instructions, when run by the processor 401, can implement the above method performed by user equipment as described in detail in the present invention.

The method and related equipment according to the present invention have been described above in combination with preferred embodiments. It should be understood by those skilled in the art that the method shown above is only exemplary, and the above embodiments can be combined with one another as long as no contradiction arises. The method of the present invention is not limited to the steps or sequences illustrated above. The network node and user equipment illustrated above may include more modules. For example, the network node and user equipment may further include modules that can be developed or will be developed in the future to be applied to a base station, an MME, or UE, and the like. Various identifiers shown above are only exemplary, and are not meant for limiting the present invention. The present invention is not limited to specific information elements serving as examples of these identifiers. A person skilled in the art could make various alterations and modifications according to the teachings of the illustrated embodiments.

It should be understood that the above-described embodiments of the present invention may be implemented by software, hardware, or a combination of software and hardware. For example, various components of the base station and user equipment in the above embodiments can be implemented by multiple devices, and these devices include, but are not limited to: an analog circuit device, a digital circuit device, a digital signal processing (DSP) circuit, a programmable processor, an application-specific integrated circuit (ASIC), a field-programmable gate array (FPGA), a complex programmable logic device (CPLD), and the like.

In the present application, the "base station" may refer to a mobile communication data and control exchange center having large transmission power and a wide coverage area, including functions such as resource allocation and scheduling and data reception and transmission. "User equipment" may refer to a user mobile terminal, for example, including terminal devices that can communicate with a base station or a micro base station wirelessly, such as a mobile phone, a laptop computer, and the like.

In addition, the embodiments of the present invention disclosed herein may be implemented on a computer program product. More specifically, the computer program product is a product provided with a computer-readable medium having computer program logic encoded thereon. When executed on a computing device, the computer program logic provides related operations to implement the above technical solutions of the present invention. When executed on at least one processor of a computing system, the computer program logic causes the processor to perform the operations (the method) described in the embodiments of the present invention. Such setting of the present invention is typically provided as software, codes and/or other data structures provided or encoded on the computer-readable medium, e.g., an optical medium (e.g., compact disc read-only memory (CD-ROM)), a flexible disk or a hard disk and the like, or other media such as firmware or micro codes on one or more read-only memory (ROM) or random access memory (RAM) or programmable read-only memory (PROM) chips, or a downloadable software image, a shared database and the like in one or more modules. Software or firmware or such configuration may be installed on a computing device such that one or more processors in the computing device perform the technical solutions described in the embodiments of the present invention.

In addition, each functional module or each feature of the base station device and the terminal device used in each of the above embodiments may be implemented or executed by a circuit, which is usually one or more integrated circuits. Circuits designed to execute various functions described in this description may include general-purpose processors, digital signal processors (DSPs), application-specific integrated circuits (ASICs) or general-purpose integrated circuits, field-programmable gate arrays (FPGAs) or other programmable logic devices, discrete gates or transistor logic, or discrete hardware components, or any combination of the above. The general purpose processor may be a microprocessor, or the processor may be an existing processor, a controller, a microcontroller, or a state machine. The aforementioned general purpose processor or each circuit may be configured by a digital circuit or may be configured by a logic circuit. Furthermore, when advanced technology capable of replacing current integrated circuits emerges due to advances in semiconductor technology, the present invention can also use integrated circuits obtained using this advanced technology.

While the present invention has been illustrated in combination with the preferred embodiments of the present invention, it will be understood by those skilled in the art that various modifications, substitutions, and alterations may be made to the present invention without departing from the spirit and scope of the present invention. Therefore, the present invention should not be limited by the above-described embodiments, but should be defined by the appended claims and their equivalents.

**Claims**

1. A PEI occasion determination method performed by user equipment (UE), comprising:

   acquiring a capacity value of a paging early indication (PEI) occasion, the capacity value being the number of paging occasions corresponding to one PEI occasion;
   determining, according to the capacity value, a PEI frame number corresponding to a particular PEI occasion for the UE; and
   determining the particular PEI occasion from at least one PEI occasion associated with a PEI frame indicated by the PEI frame number, so as to detect PEI information on the particular PEI occasion.

2. The method according to claim 1, wherein the acquiring the capacity of a paging early indication (PEI) occasion comprises any one of the following:

   acquiring the capacity value from a network by means of RRC signaling;
   determining the capacity value on the basis of cycle information of the PEI occasion, a paging cycle of the UE, the total number of paging frames in the paging cycle, and the number of paging occasions corresponding to one paging frame;
   determining the capacity value on the basis of the total number of paging occasions and the total number of PEI occasions in one discontinuous reception (DRX) cycle; and
   determining the capacity value on the basis of the total number of PEI frames and the total number of paging frames in the one DRX cycle.

3. The method according to claim 1, wherein
   the determining, according to the capacity value, a PEI frame number corresponding to a particular PEI occasion for the UE comprises:

determining the PEI frame number corresponding to the particular PEI occasion according to a first rule generated on the basis of a paging cycle of the UE, the total number of paging frames in the paging cycle, a preconfigured PEI frame offset value, and a first reference value, wherein the first reference value is determined according to a second rule determined on the basis of the value relationship between the capacity value and the number of paging occasions associated with one paging frame,

or,

a minimum offset between the PEI frame and a reference radio frame is preconfigured, and the determining, according to the capacity value, a PEI frame number corresponding to a particular PEI occasion for the UE comprises:

determining a frame number of the reference radio frame according to a third rule generated on the basis of a paging cycle of the UE, the total number of paging frames in the paging cycle, a preconfigured PF frame offset value in a network in which the UE is located, and a second reference value; and

determining the PEI frame number according to a rule generated on the basis of the frame number of the reference radio frame and the minimum offset,

wherein the second reference value is determined according to a fourth rule determined on the basis of the value relationship between the capacity value and the number of paging occasions associated with one paging frame.

4. The method according to claim 3, comprising at least one of the following:

the if the capacity value is not greater than the number of paging occasions associated with one paging frame, the second rule is generated on the basis of a UE identifier of the UE in a corresponding cell, the paging cycle of the UE, and and a preconfigured minimum offset between the PEI frame and a PF frame corresponding to a paging occasion for the UE;

if the capacity value is greater than the number of paging occasions associated with one paging frame, the second rule is generated on the basis of a UE identifier of the UE in a corresponding cell, the paging cycle of the UE, a preconfigured minimum offset between the PEI frame and a PF frame corresponding to a paging occasion for the UE, the capacity value, and the number of paging occasions in the one paging frame;

if the capacity value is not greater than the number of paging occasions associated with one paging frame, the fourth rule is generated on the basis of a UE identifier of the UE in a corresponding cell and the paging cycle of the UE; and

if the capacity value is greater than the number of paging occasions associated with one paging frame, the fourth rule is generated on the basis of a UE identifier of the UE in a corresponding cell, the paging cycle of the UE, a paging frame offset value of the cell in which the UE is located, the capacity value, and the number of paging occasions in the one paging frame.

5. The method according to claim 3 or 4, wherein when the capacity value is greater than the number of paging occasions associated with one paging frame, the frame number of the reference radio frame is a frame number of a first radio frame satisfying the first rule before a paging frame for the UE.

6. The method according to any one of claims 1-4, wherein the determining the particular PEI occasion from at least one PEI occasion associated with a PEI frame indicated by the PEI frame number comprises:

if the PEI frame is associated with a plurality of PEI occasions, determining a corresponding rule according to the value relationship between the capacity value and paging occasions associated with one paging frame; and determining the particular PEI occasion from the plurality of PEI occasions according to the corresponding rule, wherein the corresponding rule is generated on the basis of the capacity value, the number of paging occasions associated with one paging frame, and a sequence number of each paging occasion in a corresponding paging frame.

7. The method according to any one of claims 1-4, further comprising:
determining, from the particular PEI occasion, a particular PEI-PDCCH monitoring occasion for detecting PEI information for the UE.

8. The method according to claim 7, wherein the determining, from the particular PEI occasion, a particular PEI-PDCCH monitoring occasion for detecting PEI information for the UE comprises:
determining, according to a sequence number of the particular PEI occasion in the PEI frame indicated by the PEI frame number and a sequence number of an SSB for the UE in all SSBs actually transmitted by the network and from at least one PEI-PDCCH monitoring occasion comprised by the particular PEI occasion, a PEI-PDCCH monitoring occasion corresponding to the SSB for the UE, the PEI-PDCCH monitoring occasion being used to detect the PEI information for the UE.

9. The method according to any one of claims 1-4, wherein starting position information regarding at least one PEI-PDCCH monitoring occasion comprised by the particular PEI occasion is preconfigured, and determining, from the particular PEI occasion, a particular PEI-PDCCH monitoring occasion for detecting PEI information for the UE comprises:

determining a PEI-PDCCH monitoring occasion for the UE according to a sequence number of the particular PEI occasion in the PEI frame indicated by the PEI frame number and the starting position information, the PEI-PDCCH monitoring occasion being used to detect the PEI information for the UE.

10. User equipment, comprising:

a processor; and
a memory storing instructions,
wherein the instructions, when run by the processor, perform the method according to any one of claims 1 to 9.

## FIG. 1

S102

| Acquire a capacity value of a PEI occasion |
| --- |

S104

| Determine, according to the capacity value, a PEI frame number corresponding to a particular PEI occasion for UE |
| --- |

S106

| Determine the particular PEI occasion from at least one PEI occasion associated with a PEI frame indicated by the PEI frame number, so as to detect PEI information on the particular PEI occasion |
| --- |

## FIG. 2

Slot $n_{s,f}^{\mu}$               Slot $n_{s,f}^{\mu}$ $+T_s$-1

▨ PDCCH monitoring resource

## FIG. 3

User equipment 400

Processor 401

Memory 402

## FIG. 4

## INTERNATIONAL SEARCH REPORT

| International application No. |
|---|
| **PCT/CN2022/121292** |

**A. CLASSIFICATION OF SUBJECT MATTER**

H04W 68/02(2009.01)i; H04W 76/28(2018.01)i

According to International Patent Classification (IPC) or to both national classification and IPC

**B. FIELDS SEARCHED**

Minimum documentation searched (classification system followed by classification symbols)

H04W 68/-; H04W 76/-

Documentation searched other than minimum documentation to the extent that such documents are included in the fields searched

Electronic data base consulted during the international search (name of data base and, where practicable, search terms used)

CNABS; CNTXT; CNKI: 寻呼, PO, PEI, 帧, PF, SFN, 索引, 序号, 位置; VEN; WOTXT; EPTXT; USTXT; 3GPP: PO, PEI, PF, SFN, MO, occasion?, offset, index

**C. DOCUMENTS CONSIDERED TO BE RELEVANT**

| Category* | Citation of document, with indication, where appropriate, of the relevant passages | Relevant to claim No. |
|---|---|---|
| X | CATT. "R1-2106983 "Paging enhancement for UE power saving"" *3GPP TSG RAN WG1 #106-e e-Meeting*, 07 August 2021 (2021-08-07), pages 1 and 20-27 | 1-10 |
| X | MODERATOR. "R1-2103848 "Summary of Paging Enhancements"" *3GPP TSG RAN WG1 #104-bis-e e-Meeting*, 26 April 2021 (2021-04-26), pages 1 and 39-44 | 1-10 |
| A | CN 113228580 A (FUJITSU LTD.) 06 August 2021 (2021-08-06) entire document | 1-10 |
| A | CN 110446259 A (TELECOMMUNICATIONS TECHNOLOGY RESEARCH INSTITUTE CO., LTD.) 12 November 2019 (2019-11-12) entire document | 1-10 |
| A | CN 110710285 A (HUAWEI TECHNOLOGIES CO., LTD.) 17 January 2020 (2020-01-17) entire document | 1-10 |
| A | CN 113163476 A (ZTE CORP.) 23 July 2021 (2021-07-23) entire document | 1-10 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **20 December 2022** | **28 December 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2022/121292** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 113366894 A (BEIJING XIAOMI MOBILE SOFTWARE CO., LTD.) 07 September 2021 (2021-09-07)<br>        entire document | 1-10 |

Form PCT/ISA/210 (second sheet) (January 2015)

**INTERNATIONAL SEARCH REPORT**
**Information on patent family members**

| International application No. |
| --- |
| **PCT/CN2022/121292** |

| Patent document cited in search report | | | Publication date (day/month/year) | Patent family member(s) | | | Publication date (day/month/year) |
| --- | --- | --- | --- | --- | --- | --- | --- |
| CN | 113228580 | A | 06 August 2021 | WO | 2020143006 | A1 | 16 July 2020 |
| | | | | KR | 20210095698 | A | 02 August 2021 |
| | | | | IN | 202137029097 | A | 03 September 2021 |
| | | | | US | 2021329588 | A1 | 21 October 2021 |
| | | | | EP | 3910896 | A1 | 17 November 2021 |
| | | | | JP | 2022516781 | W | 02 March 2022 |
| CN | 110446259 | A | 12 November 2019 | CN | 110446259 | B | 15 April 2022 |
| CN | 110710285 | A | 17 January 2020 | CA | 3065623 | A1 | 06 December 2018 |
| | | | | WO | 2018218687 | A1 | 06 December 2018 |
| | | | | BR | 112019025413 | A2 | 23 June 2020 |
| | | | | EP | 3634050 | A1 | 08 April 2020 |
| | | | | JP | 2020522929 | A | 30 July 2020 |
| | | | | KR | 20200008619 | A | 28 January 2020 |
| | | | | US | 2020107294 | A1 | 02 April 2020 |
| | | | | IN | 201937049599 | A | 07 February 2020 |
| | | | | VN | 69675 | A | 27 April 2020 |
| | | | | KR | 102256448 | B1 | 25 May 2021 |
| | | | | JP | 6910475 | B2 | 28 July 2021 |
| | | | | US | 11445472 | B2 | 13 September 2022 |
| CN | 113163476 | A | 23 July 2021 | WO | 2022151979 | A1 | 21 July 2022 |
| CN | 113366894 | A | 07 September 2021 | None | | | |

Form PCT/ISA/210 (patent family annex) (January 2015)